# EUROPÄISCHE PATENTANMELDUNG

(11) **EP 3 293 043 A1**
(43) Veröffentlichungstag der Anmeldung: **14.03.2018**
(21) Anmeldenummer: 17185375.7
(22) Anmeldetag: 08.08.2017
(51) Int. Cl.: B60N 2/75

(54) **FAHRZEUGSITZ**

(30) Priorität: 13.09.2016 DE 102016217454
(71) Anmelder: BOS GmbH & Co. KG, 73760 Ostfildern (DE)
(72) Erfinder: Boddenberg, Jan, 50674 Köln (DE); Bohlke, Hartmut, 42369 Wuppertal (DE); Göbbels, Andreas, 51515 Kürten (DE); Pink, Tanja, 42285 Wuppertal (DE); Sitzler, Wolfgang, 42111 Wuppertal (DE); Tutelea, Bogdan, 42799 Leichlingen (DE)
(74) Vertreter: Patentanwälte Ruff, Wilhelm, Beier, Dauster & Partner mbB

(57) **Zusammenfassung**

Ein Fahrzeugsitz (1) mit einer Tragstruktur (4, 4a bis 4f), mit einer Sitzfläche (3), sowie mit einer Rückenlehne (2) und mit wenigstens einer Armlehnenanordnung, die an der Tragstruktur gehalten ist, ist bekannt.Erfindungsgemäß weist die Armlehnenanordnung eine Befestigungseinheit auf, die werkzeuglos mit einer komplementären Aufnahmeeinheit der Tragstruktur verbindbar oder von der Aufnahmeeinheit lösbar ist.

## Beschreibung

Die Erfindung betrifft einen Fahrzeugsitz mit einer Tragstruktur, mit einer Sitzfläche sowie mit einer Rückenlehne und mit wenigstens einer Armlehnenanordnung, die an der Tragstruktur gehalten ist.

Ein derartiger Fahrzeugsitz ist bei Kleinbussen, Großraumlimousinen oder Vans allgemein bekannt. Der Fahrzeugsitz ist in einem Fahrzeuginnenraum angeordnet und weist eine formstabile Tragstruktur sowohl in einem Sitzflächenbereich als auch in einem Rückenlehnenbereich auf, die jeweils von einer Polsterung und einem Bezug zur Bildung einer Sitzfläche und zur Bildung einer Rückenlehne überdeckt ist. An der Tragstruktur ist eine Armlehnenanordnung befestigt, die mit einem schwenkbaren Armlehnenkörper versehen sein kann.

Aufgabe der Erfindung ist es, einen Fahrzeugsitz der eingangs genannten Art zu schaffen, die mit einfachen Mitteln eine verbesserte Variabilität des Fahrzeugsitzes ermöglicht.

Diese Aufgabe wird dadurch gelöst, dass die Armlehnenanordnung eine Befestigungseinheit aufweist, die werkzeuglos mit einer komplementären Aufnahmeeinheit der Tragstruktur verbindbar oder von der Aufnahmeeinheit lösbar ist. Durch die erfindungsgemäße Lösung kann die wenigstens eine Armlehnenanordnung in einfacher Weise werkzeuglos von dem Fahrzeugsitz entfernt oder an dem Fahrzeugsitz montiert werden. Dies ermöglicht innerhalb eines entsprechenden Kraftfahrzeugs, d. h. in einem Fahrzeuginnenraum, eine schnell und einfach durch eine Bedienperson zu realisierende Variabilität. Die erfindungsgemäße Lösung ist in besonders vorteilhafter Weise einsetzbar bei Kleinbussen zur Personenbeförderung oder bei anderen Personenkraftwagen in Form von Großraumlimousinen oder Vans. In gleicher Weise ist die Erfindung einsetzbar bei Fahrzeugsitzen in Schienenfahrzeugen oder Flugzeugen, wie auch bei anderen Landfahrzeugen wie Lastkraftwagen, Campingbussen, Reisemobilen oder Großbussen. In vorteilhafter Weise weist der Fahrzeugsitz beidseitig jeweils eine Armlehnenanordnung auf, so dass eine auf dem Fahrzeugsitz sitzende Person sich sowohl links als auch rechts auf der Armlehne abstützen kann. Ein derartiger Fahrzeugsitz wird auch als Captain's Chair bezeichnet. Bei entsprechendem Raumbedarf im Fahrzeuginnenraum ist es erfindungsgemäß in einfacher Weise möglich, die jeweilige Armlehnenanordnung werkzeuglos zu entfernen. Die werkzeuglose Montage oder Demontage ermöglicht ein schnelles und einfaches Anpassen des Fahrzeuginnenraumes an die jeweilige Raumnutzung. In einem Fahrzeuginnenraum eines entsprechenden Kraftfahrzeugs sind vorzugsweise mehrere erfindungsgemäße Fahrzeugsitze untergebracht. Die Tragstruktur ist in vorteilhafter Weise eine formstabile Metallkonstruktion, die sowohl im Sitzflächenbereich als auch im Bereich der Rückenlehne vorgesehen ist. Die Tragstruktur ist im Fahrzeuginnenraum fahrzeugfest befestigt und weist verschiedene Verstellmöglichkeiten auf, um eine Sitzposition des Fahrzeugsitzes im Fahrzeuginnenraum anzupassen. Die Tragstruktur ist sowohl im Sitzflächenbereich als auch im Rückenlehnenbereich mit einer Polsterung sowie mit einem Sitzbezug überdeckt, um eine entsprechende Sitzfläche sowie eine entsprechende Rückenlehne für eine auf dem Fahrzeug sitzende Person zu erzielen. Die Tragstruktur ist im Bereich der Rückenlehne zudem mit einem Kopfstützbereich versehen, der in gleicher Weise gepolstert und mit einem Bezug versehen ist wie die Sitzfläche und die Rückenlehne. Der Kopfstützbereich kann in die Rückenlehne integriert oder als getrenntes Bauteil hergestellt und mit der Tragstruktur im Bereich der Rückenlehne verbunden sein. Die Armlehnenanordnung kann starr oder schwenkbeweglich relativ zur Tragstruktur gehalten sein.

In Ausgestaltung der Erfindung weist die Befestigungseinheit oder die Aufnahmeeinheit einen beweglichen Rastmechanismus auf, und es ist ein mit dem Rastmechanismus gekoppeltes Betätigungsglied vorgesehen, das den Rastmechanismus zwischen einer Raststellung und einer Freigabestellung verlagert. Der Rastmechanismus weist wenigstens ein mechanisches Rastelement auf, das beweglich gelagert ist und mit einer stationären Rastprofilierung des Rastmechanismus zusammenwirkt. Das wenigstens eine bewegliche Rastelement ist entweder der Befestigungseinheit oder der Aufnahmeeinheit zugeordnet. Entsprechend umgekehrt ist die wenigstens eine komplementäre Rastprofilierung der Aufnahmeeinheit oder der Befestigungseinheit zugeordnet.

In weiterer Ausgestaltung der Erfindung ist das Betätigungsglied linearbeweglich oder drehbeweglich gelagert. Die Linearbeweglichkeit bzw. die Drehbeweglichkeit ist bezogen auf eine Montage- oder Demontagerichtung der Armlehnenanordnung relativ zur Tragstruktur. Wenn die Armlehnenanordnung mittels der Befestigungseinheit seitlich außen an der Aufnahmeeinheit der Tragstruktur angeordnet ist, dann entspricht die Montage- und Demontagerichtung einer Querrichtung des Fahrzeugsitzes, d. h. einer horizontalen Quererstreckung über eine Fahrzeugsitzbreite. Wenn der Fahrzeugsitz in Fahrtrichtung des Kraftfahrzeugs ausgerichtet ist, entspricht diese Quererstreckung und demzufolge die Montage- und Demontagerichtung einer Fahrzeugquerrichtung. Die Linearbeweglichkeit des Betätigungsgliedes bedeutet demzufolge eine Beweglichkeit in Quererstreckungsrichtung und die Drehbeweglichkeit des Betätigungsgliedes bedeutet eine Drehbeweglichkeit um eine in Quererstreckungsrichtung ausgerichtete Drehachse.

In weiterer Ausgestaltung der Erfindung ist der Rastmechanismus kraftbegrenzt formschlüssig wirksam, und eine Stelleinrichtung ist zur Einstellung einer Rückhaltekraft des Rastmechanismus vorgesehen. Die Kraftbegrenzung des Formschlusses des Rastmechanismus ist insbesondere vorgesehen für die Bewegung des Betätigungsgliedes, um den Rastmechanismus aus der Raststellung in die Freigabestellung zu überführen. Mittels der Stelleinrichtung ist die Rückhaltekraft des Rastmechanismus einstellbar. Hierunter ist insbesondere die Rückhaltekraft einer Bewegung des Betätigungsgliedes zu verstehen, wenn das Betätigungsglied den Rastmechanismus aus der Raststellung in die Freigabestellung verlagert. Durch die Stelleinrichtung ist die Betätigungskraft einstellbar, die notwendig ist, um mittels des Betätigungsgliedes den Rastmechanismus in die Freigabestellung zu überführen.

In weiterer Ausgestaltung der Erfindung weist der Rastmechanismus eine Bajonettverschlussfunktion auf. Die Bajonettverschlussfunktion bewirkt einen sicheren formschlüssigen Rückhalt in Axialrichtung, d. h. in Montage- oder Demontagerichtung. Diesem Rastmechanismus ist ein drehbewegliches Betätigungsglied zugeordnet. Für die Drehbeweglichkeit des Betätigungsgliedes ist eine Kraftbegrenzung des Formschlusses des Rastmechanismus in Drehrichtung vorgesehen.

In weiterer Ausgestaltung der Erfindung weist der Rastmechanismus eine federkraftbeaufschlagte Sicherungseinrichtung auf, die den Rastmechanismus kraftbegrenzt in der Raststellung hält. Die Sicherungseinrichtung ist vorzugsweise mit der Stelleinrichtung in Wirkverbindung, um eine Rückhaltekraft der Sicherungseinrichtung einstellen zu können. Die Einstellung der Rückhaltekraft wird vorzugsweise herstellerseitig bereits bei der Herstellung des Fahrzeugsitzes vorgenommen.

In weiterer Ausgestaltung der Erfindung weisen die Befestigungseinheit oder die Aufnahmeeinheit eine Magnetsicherung auf, und es ist ein Betätigungsglied vorgesehen, das zwischen einer eine Magnetfunktion der Magnetsicherung reduzierenden Lösestellung und einer die Magnetfunktion herstellenden Sicherungsstellung beweglich gelagert ist. Durch entsprechende Bewegung des Betätigungsgliedes kann demzufolge die Magnetfunktion der Magnetsicherung aufgehoben werden, wodurch die Armlehnenanordnung in einfacher Weise vom Fahrzeugsitz entfernt werden kann. Bei erneuter Montage wird das Betätigungsglied in vorteilhafter Weise so bewegt, dass die Magnetfunktion der Magnetsicherung wirksam ist und demzufolge die Armlehnenanordnung gegen die Entnahmerichtung sicher an der Tragstruktur hält.

In weiterer Ausgestaltung der Erfindung weist die Magnetsicherung wenigstens einen Permanentmagneten an der Befestigungseinheit oder der Aufnahmeeinheit auf, und der Aufnahmeeinheit oder der Befestigungseinheit ist wenigstens ein komplementäres, magnetisierbares Metallteil zugeordnet. Die Magnetsicherung und demzufolge der wenigstens eine Permanentmagnet wirken in Demontage- bzw. in Montagerichtung. Dies bedeutet, dass eine Bedienperson die Armlehnenanordnung bei aktivierter Magnetfunktion des wenigstens einen Permanentmagneten nicht von der Tragstruktur wegziehen kann, da die Magnetkraft des wenigstens einen Permanentmagneten eine entsprechende Gegenkraft aufbringt.

In weiterer Ausgestaltung der Erfindung ist das Betätigungsglied drehbar gelagert, und die Magnetsicherung ist in Verbindungs- oder Löserichtung der Befestigungseinheit wirksam. Dies entspricht der Montage- und Demontagerichtung. Durch die Drehbarkeit des Betätigungsgliedes wird auf die Armlehnenanordnung eine Axialbewegung in Entnahmerichtung übertragen, wodurch das wenigstens eine magnetisierbare Metallteil und der wenigstens eine Permanentmagnet sich voneinander entfernen. Dies reduziert die auf die Armlehnenanordnung wirkende Magnetkraft, so dass die Armlehnenanordnung von der Tragstruktur entfernt werden kann.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt eine Ausführungsform eines erfindungsgemäßen Fahrzeugsitzes in perspektivischer und schematischer Darstellung,
- Fig. 2: in detaillierter Darstellung einen Teilbereich eines Fahrzeugsitzes gemäß Fig. 1 in einer ersten Ausführungsform,
- Fig. 3: den Teilbereich des Fahrzeugsitzes nach Fig. 2 in einer Schnittdarstellung,
- Fig. 4 und 5: perspektivische Explosionsdarstellungen aus unterschiedlichen Perspektiven des Teilbereichs des Fahrzeugsitzes nach den Fig. 2 und 3,
- Fig. 6: einen Teilbereich einer zweiten Ausführungsform eines erfindungsgemäßen Fahrzeugsitzes gemäß Fig. 1 ähnlich Fig. 2,
- Fig. 7: eine Querschnittsdarstellung des Teilbereiches nach Fig. 6,
- Fig. 8: den Teilbereich des Fahrzeugsitzes nach den Fig. 6 und 7 in einer perspektivischen Explosionsdarstellung,
- Fig. 9: einen Teilbereich einer dritten Ausführungsform eines erfindungsgemäßen Fahrzeugsitzes gemäß Fig. 1,
- Fig. 10: eine Schnittdarstellung des Teilbereichs nach Fig. 9,
- Fig. 11 und 12: in zwei unterschiedlichen Perspektiven Explosionsdarstellungen des Teilbereichs nach den Fig. 9 und 10,
- Fig. 13: in perspektivischer Darstellung einen Teilbereich einer vierten Ausführungsform eines erfindungsgemäßen Fahrzeugsitzes,
- Fig. 14: eine Schnittdarstellung des Teilbereichs nach Fig. 13,
- Fig. 15 und 16: unterschiedliche Perspektiven einer Explosionsdarstellung des Teilbereiches nach den Fig. 13 und 14,
- Fig. 17: in perspektivischer Darstellung einen Teilbereich einer fünften Ausführungsform eines erfindungsgemäßen Fahrzeugsitzes gemäß Fig. 1,
- Fig. 18: einen Querschnitt durch den Teilbereich nach Fig. 17,
- Fig. 19 und 20: unterschiedliche Perspektiven einer Explosionsdarstellung des Teilbereichs nach den Fig. 17 und 18 und
- Fig. 21: in perspektivischer Explosionsdarstellung einen Teilbereich einer weiteren Ausführungsform eines erfindungsgemäßen Fahrzeugsitzes ähnlich den Fig. 6 bis 8.

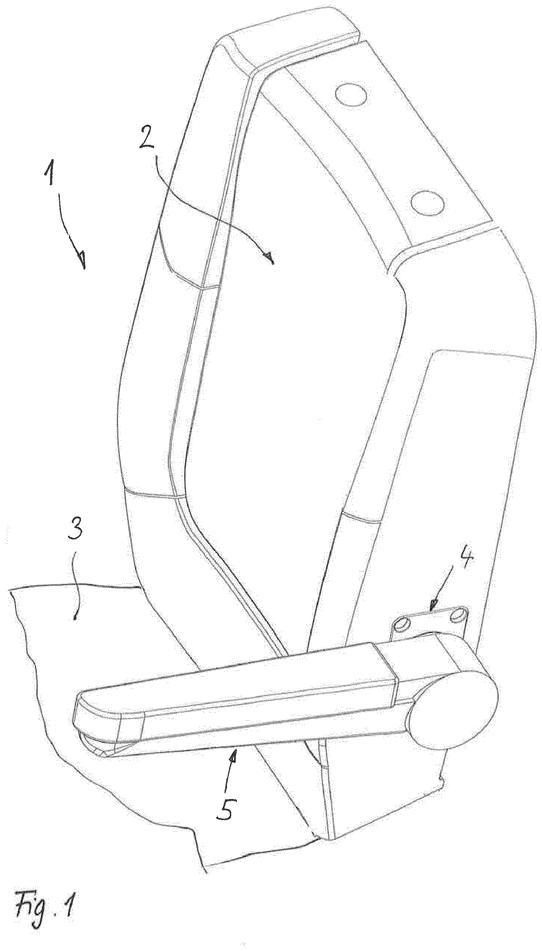

Ein Fahrzeugsitz 1 gemäß Fig. 1 ist in nicht näher dargestellter Weise in einem Fahrzeuginnenraum eines Kraftfahrzeugs untergebracht. Der Fahrzeugsitz 1 ist im Fahrzeuginnenraum fahrzeugfest montiert. Der Fahrzeugsitz 1 weist eine Tragstruktur 4 auf, die in Fig. 1 durch eine Rückenlehne 2 und eine Sitzfläche 3 weitgehend verdeckt ist. Die Tragstruktur 4 stellt eine formstabile Metallkonstruktion dar, die die Sitzfläche 3 und die Rückenlehne 2 stabilisiert. Die Tragstruktur ist weitgehend vollständig von entsprechenden Polsterungen und Sitzbezügen im Bereich der Rückenlehne 2 und im Bereich der Sitzfläche 3 überdeckt. Die Tragstruktur weist in nicht näher dargestellter Weise Verstelleinrichtungen auf, um den Fahrzeugsitz 1 in Längsrichtung innerhalb des Fahrzeuginnenraumes zu verstellen oder innerhalb des Fahrzeuginnenraumes verdrehen zu können. Zudem weist die Tragstruktur 4 wenigstens eine Verstelleinrichtung auf, um eine Neigung der Rückenlehne 2 relativ zur Sitzfläche 3 einstellen zu können.

Wie anhand der Fig. 1 erkennbar ist, ist der Fahrzeugsitz 1 zudem mit einer Armlehnenanordnung 5 versehen, die im Bereich einer Seitenwange der Rückenlehne 2 an einer Aufnahmeeinheit der Tragstruktur 4 befestigt ist. Die Armlehnenanordnung 5 kann in montiertem Zustand an der Tragstruktur 4 starr angeordnet oder relativ zu einer Sitzquerachse schwenkbeweglich gelagert sein. Anhand der Darstellung in Fig. 1 ist lediglich die in Sitzrichtung gesehene linke Armlehnenanordnung 5 dargestellt. Der Fahrzeugsitz 1 kann jedoch auch mit einer in Sitzrichtung rechten, weiteren Armlehnenanordnung versehen sein, die spiegelsymmetrisch zu der Armlehnenanordnung 5 auf der gegenüberliegenden rechten Seitenwange der Rückenlehne 2 an der Tragstruktur 4 gehalten ist und spiegelsymmetrisch identisch gestaltet ist wie die Armlehnenanordnung 5 und die Befestigung der Armlehnenanordnung 5 an der Aufnahmeeinheit der Tragstruktur 4.

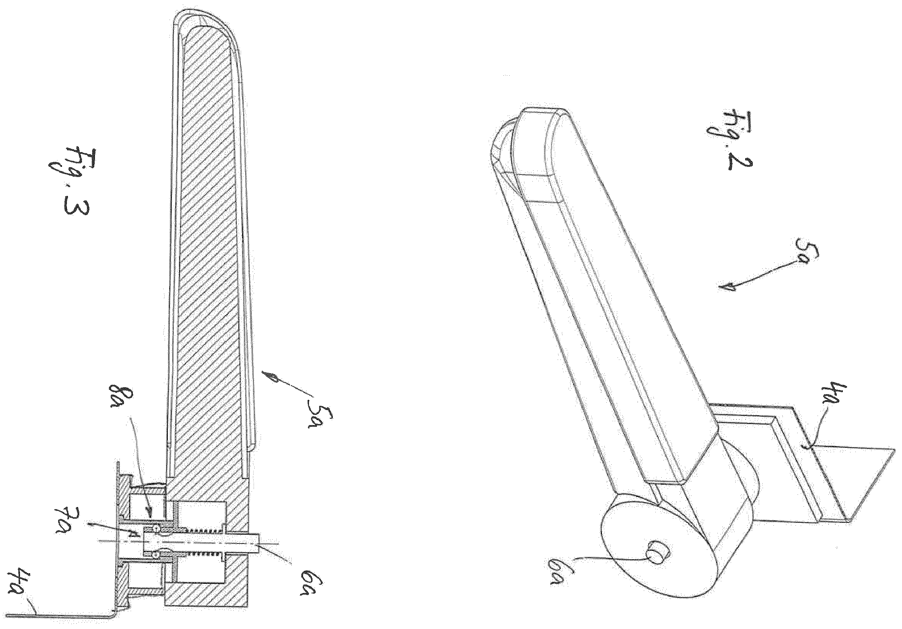

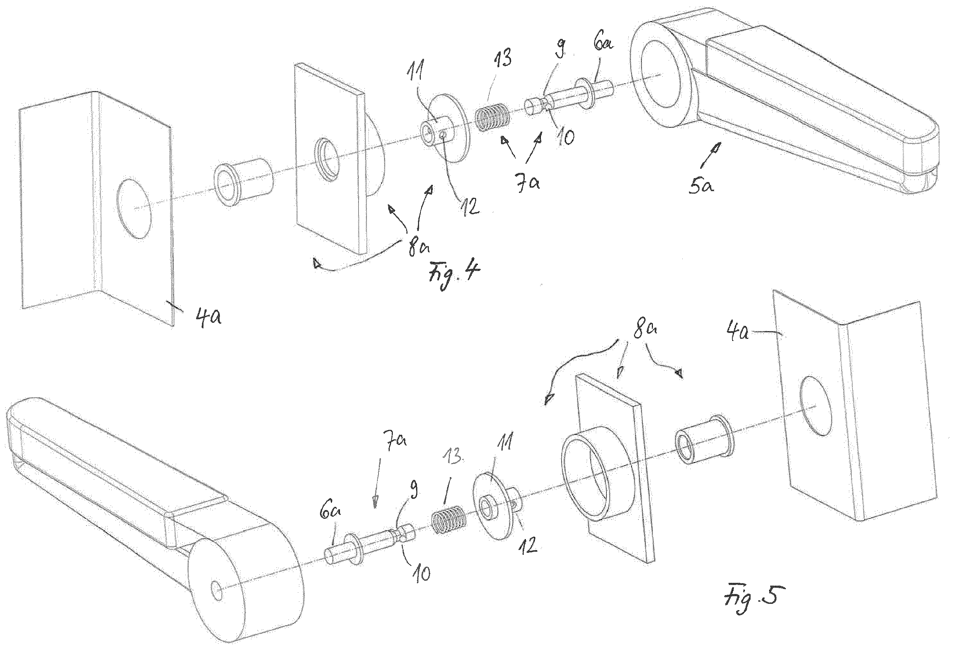

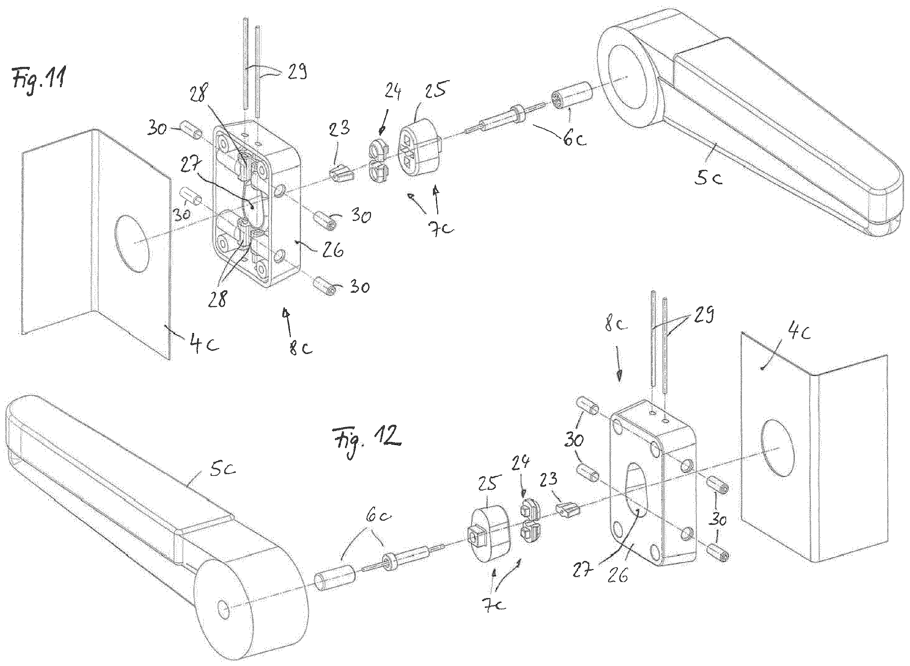

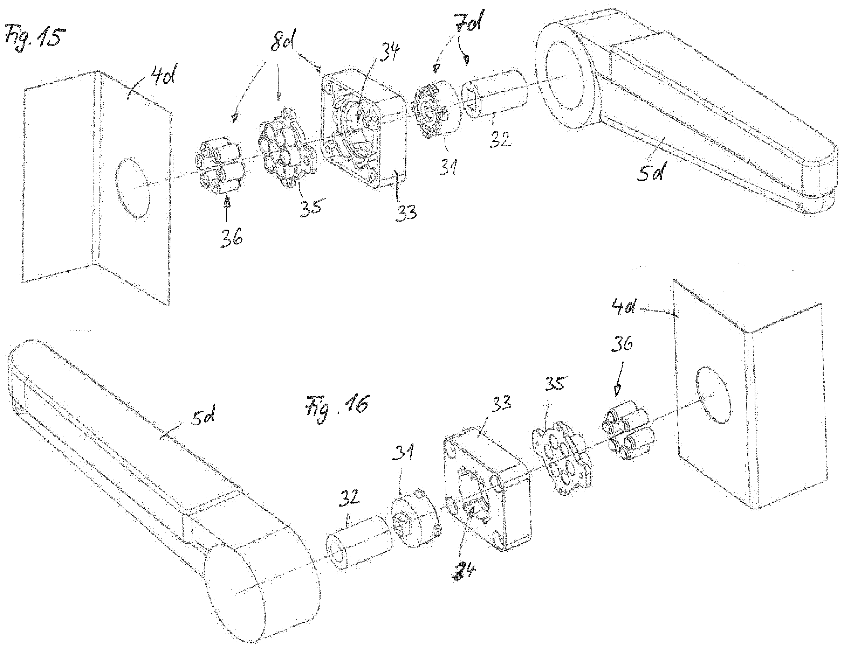

Anhand der Fig. 2 bis 20 sind fünf unterschiedliche Ausführungsformen von Fahrzeugsitzen 1 gemäß Fig. 1 dargestellt, wobei anhand der Fig. 2 bis 20 lediglich die jeweiligen Unterschiede im Bereich der Befestigung und werkzeuglosen Entnahmemöglichkeit der Armlehnenanordnung 5 relativ zur Tragstruktur 4 des Fahrzeugsitzes 1 dargestellt sind. Demzufolge sind anhand der Fig. 2 bis 20 von der jeweiligen Ausführungsform des Fahrzeugsitzes jeweils lediglich die entsprechende Aufnahmeeinheit im Bereich der Tragstruktur und eine komplementäre Befestigungseinheit der Armlehnenanordnung 5 zur werkzeuglosen Befestigung und Entnahme der Armlehnenanordnung 5 relativ zur Tragstruktur 4 gezeigt. Die übrigen Funktionsabschnitte und Funktionsteile des jeweiligen Fahrzeugsitzes sind identisch zu dem Fahrzeugsitz 1, wie er anhand der Fig. 1 gezeigt und oben beschrieben ist. Die unterschiedlichen Ausführungsformen, wie sie anhand der Fig. 2 bis 20 dargestellt sind, sind bezüglich der funktional übereinstimmenden Teile und Abschnitte mit gleichen Bezugszeichen unter Hinzufügung des Buchstabens a für das erste Ausführungsbeispiel, unter Hinzufügung des Buchstabens b für das zweite Ausführungsbeispiel, unter Hinzufügung des Buchstabens c für das dritte Ausführungsbeispiel, unter Hinzufügung des Buchstabens d für das vierte Ausführungsbeispiel und unter Hinzufügung des Buchstabens e für das fünfte Ausführungsbeispiel versehen. Zur Vermeidung von Wiederholungen wird bezüglich jeder der dargestellten und beschriebenen Ausführungsbeispiele auf die allgemeinen Ausführungen zu dem Fahrzeugsitz 1 gemäß Fig. 1 verwiesen.

Ein Fahrzeugsitz gemäß der Ausführungsform nach den Fig. 2 bis 5 weist eine Tragstruktur 4a auf, an der eine Aufnahmeeinheit 8a zur Halterung der Armlehnenanordnung 5a befestigt ist. Die Armlehnenanordnung 5a weist eine Befestigungseinheit 7a auf, die mit der Aufnahmeeinheit 8a in montiertem Zustand der Armlehnenanordnung 5a zusammenwirkt. Zur Sicherung der Befestigungseinheit 7a an der Aufnahmeeinheit 8a ist ein Rastmechanismus vorgesehen, der nachfolgend näher beschrieben wird. Dieser Rastmechanismus ist durch ein Betätigungsglied 6a aus einer Raststellung in eine Freigabestellung überführbar, in der die Armlehnenanordnung 5a von der Aufnahmeeinheit 8a und von der Tragstruktur 4a entnommen werden kann. Die anhand der Fig. 3 bis 5 dargestellten, strichpunktierten Achsen stellen eine Montage- und Demontageachse für die Armlehnenanordnung 5a relativ zur Tragstruktur 4a dar.

Das Betätigungsglied 6a erstreckt sich längs der Montage- und Demontageachse in Sitzquerrichtung durch die Armlehnenanordnung 5a hindurch und ist nach Art eines Druckknopfes im Bereich einer Außenseite der Armlehnenanordnung 5a zugänglich (Fig. 2 und 3). Das Betätigungsglied 6a bildet einen längserstreckten Rastbolzen, der zylindrisch gestaltet ist und an seinem von der Druckknopfseite abliegenden Endbereich eine Ringnut 9 aufweist, die in beiden Axialrichtungen mit einander zugewandten und gegensinnig ausgerichteten, konischen Anlaufschrägen versehen ist. In der Ringnut 9 sind zwei Rastkugeln 10 positioniert, die in nicht näher dargestellter Weise über einen elastischen Ring in der Ringnut positionsgesichert sind. Dem Betätigungsglied 6a ist zudem eine als Schraubendruckfeder gestaltete Rückstellfeder 13 zugeordnet, die koaxial auf den Rastbolzen des Betätigungsgliedes 6a aufgeschoben ist. Die Rückstellfeder 13 stützt sich einerseits an einer Ringschulter des Betätigungsgliedes 6a und andererseits an einem Ringflansch einer Rasthülse 11 der Aufnahmeeinheit 8a ab. Die Rasthülse 11 weist auf gegenüberliegenden Seiten zwei zylindrische Rastaussparungen 12 auf, die quer zur Montage- und Demontageachse in einem Hülsenmantel der Rasthülse 11 vorgesehen sind. Die Rastaussparungen 12 wirken in montiertem Zustand mit den Rastkugeln 10 zusammen, um die Armlehnenanordnung 5a an der Aufnahmeeinheit 8a und damit an der Tragstruktur 4a zu sichern. Die Aufnahmeeinheit 8a ist einschließlich der Rasthülse 11 in nicht näher dargestellter Weise an der Tragstruktur 4a befestigt, insbesondere durch Verschweißung oder durch Verschraubung.

In montiertem Zustand sind die Rastkugeln 10 in die Rastaussparungen 12 der Rasthülse 11 eingerastet, wodurch die Befestigungseinheit 7a der Armlehnenanordnung 5a formschlüssig an der Aufnahmeeinheit 8a der Tragstruktur 4a gesichert ist. Das Betätigungsglied 6a ist in dieser montierten Position durch die Rückstellfeder 13 so weit axial zurückgedrückt, dass ein zylindrischer Stirnendbereich des Rastbolzens des Betätigungsgliedes 6a die Rastkugeln 10 radial in den Rastaussparungen 12 der Rasthülse 11 gedrückt hält. Sobald nun der Druckknopf des Betätigungsgliedes 6a gegen die Rückstellkraft der Rückstellfeder 13 zur Tragstruktur 4a hin gedrückt wird, wird zwangsläufig die Ringnut 9 auf radiale Höhe der Rastkugeln 10 und der Rastaussparungen 12 gedrückt. Hierdurch werden die Rastkugeln 10 mittels des nicht dargestellten elastischen Rings zwangsläufig radial nach innen gezogen und tauchen in die Ringnut 9 ein. Hierdurch geben die Rastkugeln 10 die Rastaussparungen 12 frei, so dass das Betätigungsglied 6a einschließlich der Armlehnenanordnung 5a axial aus der Rasthülse 11 der Aufnahmeeinheit 8a herausgezogen werden kann. Bei erneuter Montage der Armlehnenanordnung 5a wird der Rastbolzen des Betätigungsgliedes 6a zwangsläufig wieder in die Rasthülse 11 eingesteckt. Die Rückstellkraft der Rückstellfeder 13 drückt das Betätigungsglied 6a wieder axial von der Tragstruktur 4a weg, wodurch die Rastkugeln 10 radial nach außen ausweichen müssen, da sie durch die entsprechende konische Anlaufschräge der Ringnut 9 radial nach außen gedrückt werden. Dadurch tauchen die Rastkugeln 10 wieder in die Rastaussparungen 12 der Rasthülse 11 ein. Damit ist die Befestigungseinheit 7a wieder in der Aufnahmeeinheit 8a formschlüssig gesichert.

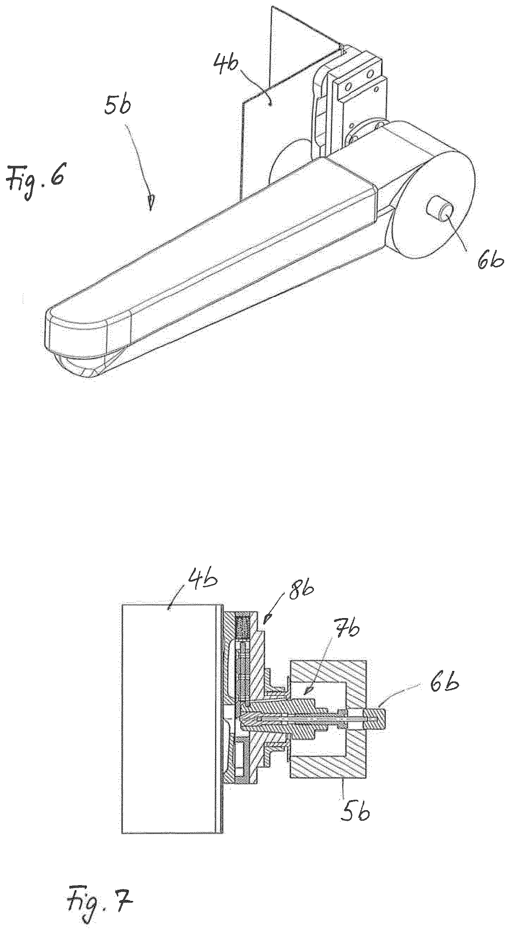

Bei der Ausführungsform gemäß den Fig. 6 bis 8 wird die Armlehnenanordnung 5b mittels einer Befestigungseinheit 7b an einer Aufnahmeeinheit 8b der Tragstruktur 4b gehalten. Die Sicherung der Armlehnenanordnung 5b an der Tragstruktur 4b erfolgt durch einen Rastmechanismus, der mittels einer längs der Montage- und Demontageachse verlaufenden Axialbewegung eines Betätigungsgliedes 6b gelöst werden kann.

Im Einzelnen ist an der Armlehnenanordnung 5b ein relativ zur Montage- und Demontageachse rotationsunsymmetrisch gestalteter Steckkeil 14 befestigt, in dem das Betätigungsglied 6b linearbeweglich verschiebbar angeordnet ist. Das Betätigungsglied 6b weist im Bereich der Außenseite der Armlehnenanordnung 5b einen Druckknopf auf. An einem gegenüberliegenden Stirnendbereich weist das Betätigungsglied 6b einen Steuerkeil 15 auf, der nachfolgend in näher beschriebener Weise mit einer Rastkeilanordnung 20 bis 22 zusammenwirkt.

Die an der Tragstruktur 4b befestigte Aufnahmeeinheit 8b weist eine Steckaufnahme 17 auf, deren Aufnahmebereich komplementär rotationsunsymmetrisch zu dem Steckkeil 14 gestaltet ist. Der Steckkeil 14 weist zudem im Bereich einer Oberseite eine quer zur Montage- und Demontageachse erstreckte und nach oben offene Rastnut 16 auf, in die ein Rastschieber 22 der Rastschieberanordnung 20 bis 22 formschlüssig eintaucht. Die Rastschieberanordnung 20 bis 22 ist in einem Führungsgehäuse 18 radial zur Montage- und Demontageachse linearbeweglich verschiebbar gelagert. Eine Rückstellfeder 53 in Form einer Schraubendruckfeder übt auf die Rastschieberanordnung 20 bis 22 eine permanente Rückstellkraft in Rastrichtung aus. Die Rastschieberanordnung weist ein Verbindungsglied 21 auf, das den Rastschieber 22 axial zu einem Steuerschieber 20 positioniert. Der Rastschieber 22, das Verbindungsglied 21 und der Steuerschieber 20 liegen parallel - in Axialrichtung der Montage- und Demontageachse hintereinander - aneinander an und sind über Verschraubungen zu einer Einheit, nämlich der Rastschieberanordnung miteinander verbunden. Der Steuerschieber 20 ragt in den Bewegungsweg des Steuerkeiles 15 hinein, wohingegen der Rastschieber 22 in montiertem Zustand in die Rastnut 16 des Steckkeiles 14 eintaucht. Sowohl der Rastschieber 22 als auch der Steuerschieber 20 weisen an ihren unteren Stirnkanten Anlaufschrägen auf, die mit entsprechenden Stirnflächen des Steckkeiles 14 bzw. des Steuerkeiles 15 zusammenwirken.

Für eine Montage der Armlehnenanordnung 5b wird der Steckkeil 14 zusammen mit der Armlehnenanordnung 5b in einfacher Weise in den Aufnahmebereich 17 eingesteckt, wodurch eine Stirnfläche des Steckkeiles 14 den Steuerschieber 22 radial zur Montage- und Demontageachse nach oben drückt, bis der Rastschieber 22 in die Rastnut 16 einrastet. Um nun die Armlehnenanordnung 5b demontieren zu können, wird in einfacher Weise der Druckknopf des Betätigungsgliedes 6b axial in Richtung der Tragstruktur 4b nach innen gedrückt, wodurch der Steuerkeil 15 den Steuerschieber 20 nach oben schiebt. Hierdurch kommt der Rastschieber 22 aus der Rastnut 16 frei und die Armlehnenanordnung 5b kann entnommen werden.

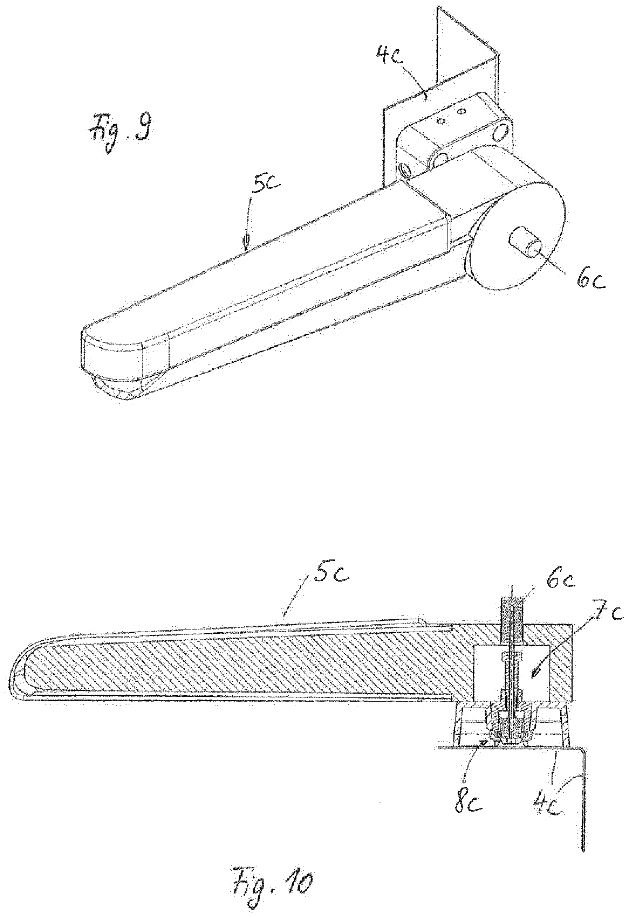

Bei der Ausführungsform nach den Fig. 9 bis 12 wird die Armlehnenanordnung 5c an der Tragstruktur 4c über eine Befestigungseinheit 7c gehalten, die mit einer an der Tragstruktur 4c befestigten Aufnahmeeinheit 8c formschlüssig zusammenwirkt. Zur Sicherung der Befestigungseinheit 7c an der Aufnahmeeinheit 8c ist ein nachfolgend näher beschriebener Rastmechanismus vorgesehen, der axial zur Montage- und Demontageachse formschlüssig wirksam ist. Um den Rastmechanismus aus seiner Raststellung in seine Freigabestellung überführen zu können, ist ein Betätigungsglied 6c vorgesehen, das koaxial zur Montage- und Demontageachse in der Armlehnenanordnung 5c linearbeweglich gelagert ist und einen Druckknopf aufweist, der über eine Außenseite der Armlehnenanordnung 5c nach außen abragt.

Die Befestigungseinheit 7c weist einen rotationsunsymmetrischen Steckkeil 25 auf, der an der Armlehnenanordnung 5c befestigt ist. An einer in Einsteckrichtung vorderen Stirnfläche des Steckkeiles 25 sind zudem zwei Rastprofilkörper 24 befestigt, die an ihren gegenüberliegenden Längsseiten zwei in Hochrichtung parallel zu einer Radialen erstreckte Rastnuten bilden. Die beiden Rastnuten sind zu den gegenüberliegenden Seiten des Steckkeiles 25 hin offen. In dem Steckkeil 25 ist ein Steuerkeil 23 linearbeweglich geführt, der mit einem Stirnendbereich des Betätigungsgliedes 6c fest verbunden ist.

An der Tragstruktur 4c ist ein Aufnahmegehäuse 26 befestigt, das mit einem zu dem Steckkeil 25 komplementären, rotationsunsymmetrischen Steckaufnahmebereich 27 versehen ist. In den Steckaufnahmebereich 27 ragen zwei elastisch biegebewegliche Raststangen 29 hinein, die in Hochrichtung parallel zueinander ausgerichtet und in entsprechenden Führungen 28 des Aufnahmegehäuses 26 gehalten sind. Den Führungen 28 ist zudem eine Stelleinrichtung zur Einstellung der jeweiligen Biegung der Raststangen 29 zugeordnet. Die beiden Raststangen 29 sind als zylindrische Federstahldrähte ausgeführt. Die Stelleinrichtung weist insgesamt vier Stellschrauben 30 auf, die von gegenüberliegenden Außenseiten her in das Aufnahmegehäuse 26 eingeschraubt sind und in die Führungen 28 hineintauchen. Durch entsprechende Verdrehung der Stellschrauben 30 können die Raststangen 29 in einer gemeinsamen Radialebene bogenförmige Krümmungen einnehmen, wobei die bogenförmigen Ausrichtungen gegensinnig zueinander erfolgen. Hierdurch kann je nach Einstellung der Krümmung mittels der Stelleinrichtung ein größerer oder ein kleinerer Freiraum zwischen den Raststangen 29 innerhalb des Steckaufnahmebereiches 27 erreicht werden.

Der Steuerkeil 23 dient dazu, bei Betätigung des Druckknopfes des Betätigungsgliedes 6c die beiden Raststangen 29 in der Radialebene auseinanderzudrücken und so den Steckkeil 25 im Bereich der Rastnuten, die durch die Rastprofilkörper 24 gebildet sind, für eine Entnahme freizugeben. Der Freiraum zwischen den Raststangen 29 definiert die Druckkraft, die notwendig ist, um den Steuerkeil 23 zwischen die Raststange 29 zu schieben und die Raststange 29 so zu spreizen. Die so gebildete Rückhaltekraft durch die Raststange 29 wird herstellerseitig bei Montage des Aufnahmegehäuses 26 an der Tragstruktur 4c eingestellt.

Für ein Lösen der Armlehnenanordnung 5c von der Tragstruktur 4c wird gemäß Fig. 10 der Druckknopf des Betätigungsgliedes 6c in einfacher Weise in Richtung der Tragstruktur 4c gedrückt, wodurch der Steuerkeil 23 die Raststangen 29 voneinander spreizt. Hierdurch kommen die Raststangen 29 aus den Rastnuten der Rastprofilkörper 24 des Steckkeiles 25 frei und die Armlehnenanordnung 5c kann in einfacher Weise entnommen werden. Bei erneuter Montage der Armlehnenanordnung 5c drücken in einfacher Weise entsprechende frontseitige Anlaufschrägen der Rastprofilkörper 24 des Steckkeiles 25 die Raststangen 29 auseinander, so dass die Raststangen 29 beim Einsteckvorgang des Steckkeiles 25 in den Steckaufnahmebereich 27 in einfacher Weise in den Rastnuten einrasten. Eine erneute Demontage erfolgt dann durch erneutes Drücken des Betätigungsgliedes 6c.

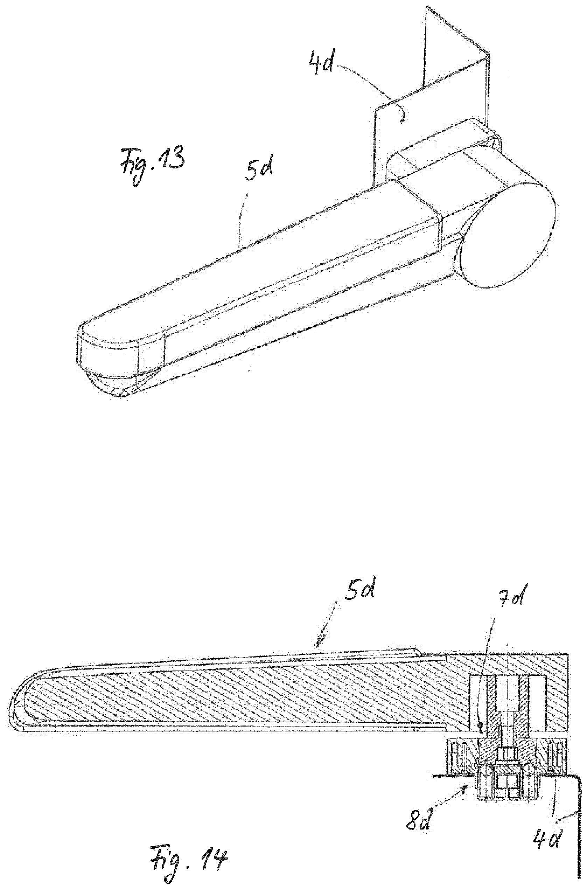

Bei der Ausführungsform nach den Fig. 13 bis 16 wird eine Armlehnenanordnung 5d mittels einer Befestigungseinheit 7d an einer Aufnahmeeinheit 8d der Tragstruktur 4d gehalten. Zur Sicherung der Befestigungseinheit 7d an der Aufnahmeeinheit 8d ist ein Rastmechanismus vorgesehen, der einen Bajonettverschluss aufweist, wie er nachfolgend näher beschrieben wird.

An der Armlehnenanordnung 5d ist ein zylindrisches Betätigungsglied 32 vorgesehen, das an der Armlehnenanordnung 5d befestigt ist, und das im Wesentlichen durch eine Drehbewegung relativ zur Montage- und Demontageachse ein Verrasten oder Freigeben des Rastmechanismus bewirkt. Für die Bedienperson bildet demzufolge die Armlehnenanordnung 5d gemeinsam mit dem Betätigungsglied 32 die Angriffsfläche, um durch entsprechende Verdrehung ein Montieren oder Demontieren der Armlehnenanordnung 5d bewirken zu können. An einem von der Armlehnenanordnung 5d abgewandten Stirnendbereich des Betätigungsgliedes 32 ist ein Bajonettrastteil 31 befestigt, das mit einer Bajonettrastaufnahme 34 eines Aufnahmegehäuses 33 zusammenwirkt, das an der Tragstruktur 4d befestigt ist. In dem Aufnahmegehäuse 33 ist zudem eine Sicherungseinrichtung 35, 36 vorgesehen, die einen Druckkörperhalter 35 sowie mehrere Druckkörper 36 aufweist. Der Druckkörperhalter 35 ist rückseitig an dem Aufnahmegehäuse 33 befestigt. Die Druckkörper 36 weisen becherförmige Gehäuse auf, an deren Stirnseite jeweils Sicherungskugeln teilweise aus den Bechergehäusen herausragen, die durch Schraubendruckfedern druckbeaufschlagt sind. Damit sind die Sicherungskugeln achsparallel zur Montage- und Demontageachse federelastisch beweglich gelagert. Die Druckkörper 36 sind in dem Druckkörperhalter 35 derart befestigt, dass die Sicherungskugeln bodenseitig des Aufnahmegehäuses 33 in den Bajonettaufnahmeraum 34 des Aufnahmegehäuses 33 axial hineinragen. Sobald nun der Bajonettsteckkörper 31 in den Bajonettaufnahmeraum 34 axial hineingesteckt wird und entsprechende radial nach außen ragende Bajonettstege des Bajonettsteckkörpers 31 in die komplementären Stecknuten des Bajonettaufnahmeraumes 34 eintauchen, werden die Sicherungskugeln der Druckkörper 36 axial zurückgedrückt, sobald die Stirnfläche des Bajonettsteckkörpers 31 die Bodenfläche des Bajonettaufnahmeraumes 34 berührt, die durch eine Stirnfläche des Druckkörperhalters 35 gebildet ist. In dieser Stellung wird der Bajonettsteckkörper 31 gemeinsam mit dem Betätigungsglied 32 und der Armlehnenanordnung 5d um einen bestimmten Drehwinkel koaxial zur Montage- und Demontageachse verdreht, wodurch die radial nach außen ragenden Bajonettraststege in die entsprechend in Umfangsrichtung verlaufenden Rastkonturen des Bajonettaufnahmeraumes 34 hineingedreht werden. Nach Wegnahme der axialen Druckbelastung durch die Bedienperson drücken die Sicherungskugeln der Druckkörper 36 die Stirnfläche des Bajonettsteckkörpers 31 zwangsläufig axial wieder zurück, wodurch der Bajonettsteckkörper 31 in der Rastkontur des Bajonettaufnahmeraumes 34 axial gesichert ist.

Um die Armlehnenanordnung 5d aus dieser montierten Stellung wieder lösen zu können, wird die Armlehnenanordnung 5d gemeinsam mit dem Betätigungsglied 32 und dem Bajonettsteckkörper 31 durch die Bedienperson zunächst axial nach innen gedrückt und anschließend um den zuvor genannten Drehwinkel in entgegengesetzter Richtung verdreht, wodurch die Sicherungskugeln zunächst axial zurückgedrückt werden, um die Raststege des Bajonettsteckkörpers 31 für die gewünschte Drehbewegung freizugeben. Anschließend drücken die Sicherungskugeln der Druckkörper 36 den Bajonettsteckkörper 31 quasi selbsttätig in die axialen Stecknuten des Bajonettaufnahmeraumes 34 in Entnahmerichtung hinein, wodurch anschließend in einfacher Weise eine axiale Entnahme der Armlehnenanordnung 5d ermöglicht ist.

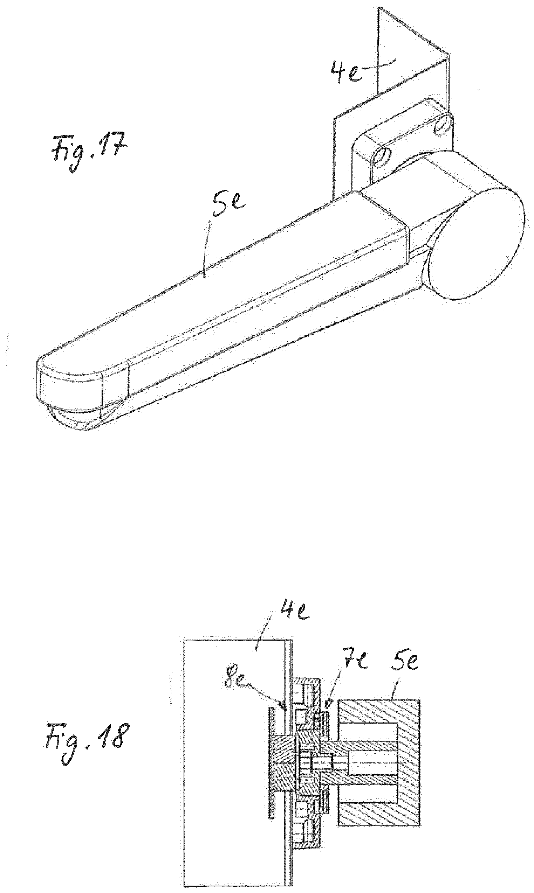

Bei der Ausführungsform nach den Fig. 17 bis 20 weist die Armlehnenanordnung 5e eine Befestigungseinheit 7e auf, die mit einer Aufnahmeeinheit 8e verbindbar ist, um die Armlehnenanordnung 5e an der Tragstruktur 4e zu sichern. Die Aufnahmeeinheit 8e ist an der Tragstruktur 4e befestigt.

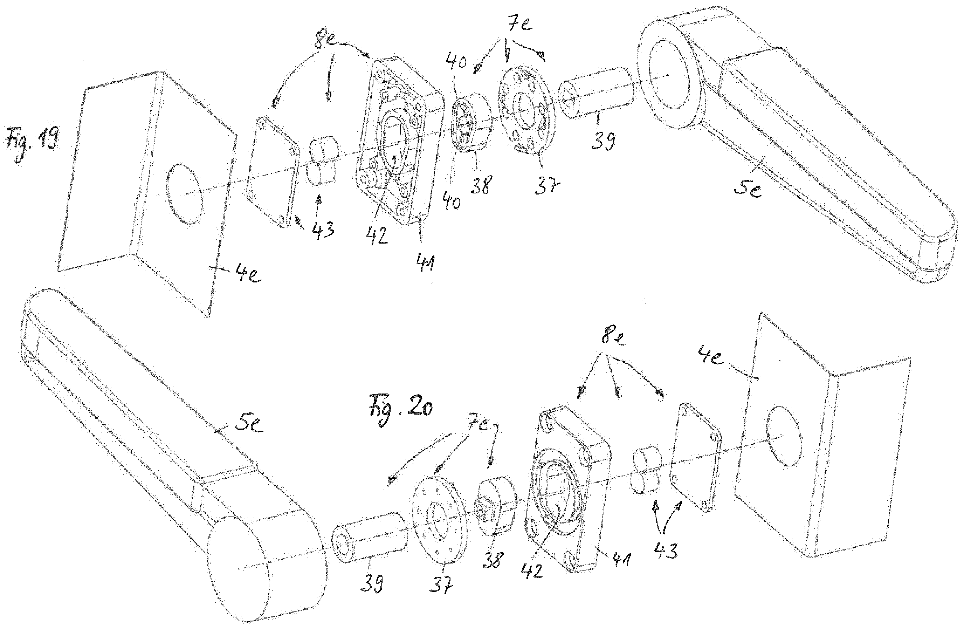

Im Einzelnen weist die Armlehnenanordnung 5e eine Halterung 39 auf, an der ein Steckkeil 38 befestigt ist, der mit einer rotationsunsymmetrischen äußeren Steckkontur versehen ist. Der Steckkeil 38 weist im Bereich seiner frontseitigen Stirnfläche zwei Metallstifte 40 auf, die aus einer magnetisierbaren Metalllegierung wie insbesondere Stahl hergestellt sind. Die Metallstifte 40 sind axial in die frontseitige Stirnfläche des Steckkeiles 38 eingesteckt und in dem Steckkeil 38 befestigt. Beide Metallstifte 40 sind zu der frontseitigen Stirnfläche hin frei. Auf der zylindrischen Halterung 39 ist ein scheibenringförmiges Betätigungsglied 37 drehbeweglich gelagert. Das scheibenringförmige Betätigungsglied 37 kann mit einem schwenkbeweglichen Armlehnenteil der Armlehnenanordnung 5e fest verbunden sein, wobei der schwenkbewegliche Armlehnenteil um die Montage- und Demontageachse schwenkbeweglich relativ zu einem feststehenden Teil der Armlehnenanordnung 5e gelagert ist, an dem die Halterung 39 und der Steckkeil 38 befestigt sind. Anhand der Fig. 19 ist erkennbar, dass das scheibenringförmige Betätigungsglied 37 an seiner der Tragstruktur 4e zugewandten Stirnfläche mit über den Umfang verteilt angeordneten, keilförmigen Anlaufschrägen versehen ist, auf die nachfolgend näher eingegangen wird.

Ein Aufnahmegehäuse 41 der Aufnahmeeinheit 8e ist an der Tragstruktur 4e befestigt. Das Aufnahmegehäuse 41 weist eine Steckaufnahme 42 auf, die komplementär zu der rotationsunsymmetrischen Steckkontur des Steckkeiles 38 ebenfalls rotationsunsymmetrisch gestaltet ist. Der Steckaufnahmebereich 42 ist zu einer Rückseite des Aufnahmegehäuses 41 hin offen. In der Rückseite des Aufnahmegehäuses 41 ist eine Magnetsicherung 43 positioniert, die aus zwei übereinander angeordneten Permanentmagneten besteht, die auf einer Trägerplatte insbesondere durch Verklebung befestigt sind. Die Trägerplatte ist an der Tragstruktur 4e befestigt.

Das Aufnahmegehäuse 41 weist zudem im Bereich einer der Armlehnenanordnung 5e zugewandten Frontseite eine den Steckaufnahmebereich 42 kreisförmig umgebende Steuerkontur auf, die mit keilförmigen Anlaufschrägen versehen ist, die komplementär zu den Anlaufschrägen des scheibenringförmigen Betätigungsringes 37 ausgeführt sind.

Für eine Montage der Armlehnenanordnung 5e wird die Armlehnenanordnung 5e in einfacher Weise an das Aufnahmegehäuse 41 herangeführt und mit dem Steckkeil 38 in den Steckaufnahmebereich 42 eingesteckt. Dabei ist das scheibenringförmige Betätigungsglied 37 derart relativ zu dem Steckkeil 38 verdreht, dass die komplementären keilförmigen Anlaufschrägen des Betätigungsgliedes 37 und des Aufnahmegehäuses 41 in Umfangsrichtung zueinander beabstandet sind. Die Magnetkraft der Magnetsicherung 43 zieht den Steckkeil 38 in den Steckaufnahmebereich 42 axial hinein und sichert den Steckkeil 38 in Steckrichtung durch die entsprechende Magnetkraft. Die Magnetkraft kann auf den Steckkeil 38 wirken, da die Metallstifte 40 in der Frontseite des Steckkeiles 38 von dem Permanentmagneten angezogen werden.

Um nun die Armlehnenanordnung 5e entnehmen zu können, wird der schwenkbewegliche Teil der Armlehnenanordnung 5e gemeinsam mit dem scheibenringförmigen Betätigungsglied 37 in einfacher Weise geringfügig verschwenkt (in der Darstellung gemäß Fig. 20 nach oben), wodurch das Betätigungsglied 37 zwangsläufig axial von dem Aufnahmegehäuse 41 weggedrückt wird, sobald die keilförmigen Anlaufschrägen des Aufnahmegehäuses 41 und des Betätigungsgliedes 37 gegeneinander auflaufen. Da das Betätigungsglied 37 gegenüber dem Steckkeil 38 und der Halterung 39 zwar drehbeweglich, jedoch axial gesichert ist, bewirkt die Verdrehung des Betätigungsgliedes 37 zwangsläufig eine geringfügige Axialverlagerung der Armlehnenanordnung 5e und damit auch des Steckkeiles 38 axial nach außen. Hierdurch entfernen sich die Metallstifte 40 des Steckkeiles 38 zwangsläufig axial von den Permanentmagneten der Magnetsicherung 43, wodurch die Magnetkraft, die zwischen den Metallstiften 40 und den Permanentmagneten wirksam ist, erheblich reduziert wird. Diese Reduzierung der Magnetkraft führt dazu, dass die Bedienperson die Armlehnenanordnung 5e in einfacher Weise axial entnehmen kann.

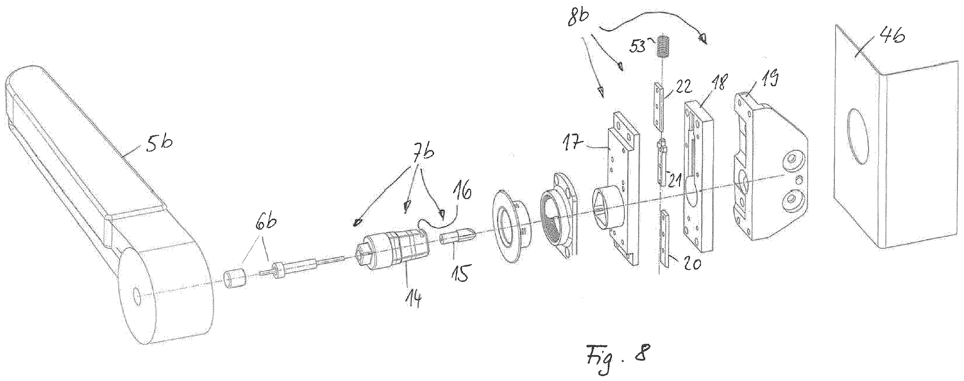

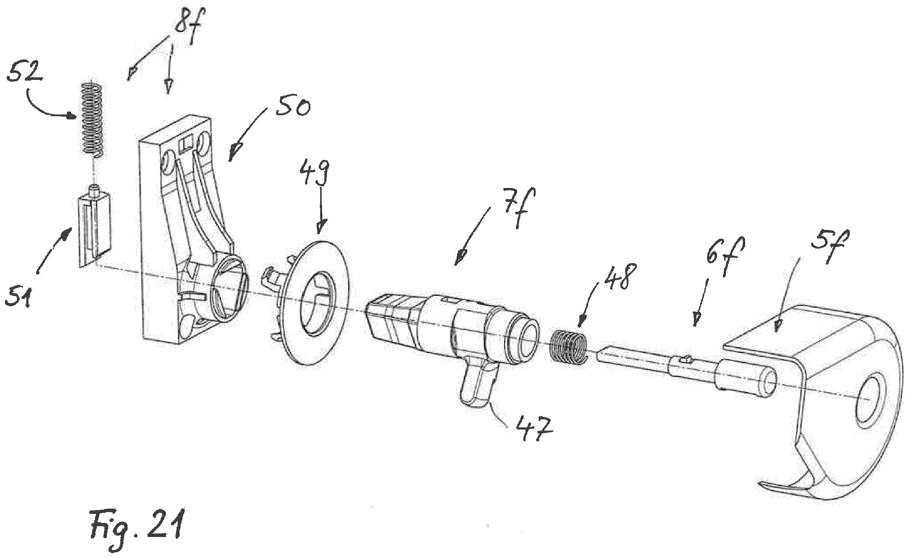

Die Ausführungsform gemäß Fig. 21 entspricht vom Funktionsprinzip und ihrem grundsätzlichen Aufbau her der Ausführungsform gemäß den Fig. 6 bis 8. Funktionsgleiche Bauteile und Abschnitte sind mit gleichen Bezugszeichen unter Hinzufügung des Buchstabens f versehen. Zur Vermeidung von Wiederholungen wird auf die Ausführungen zu den Fig. 6 bis 8 verwiesen. Wesentlicher Unterschied bei der Ausführungsform gemäß Fig. 21 ist es, dass die Armlehnenanordnung 5f mittels der Befestigungseinheit 7f an einer vereinfacht gestalteten Aufnahmeeinheit 8f der Tragstruktur gehalten ist. Die Aufnahmeeinheit 8f ist gegenüber der Aufnahmeeinheit 8b vereinfacht aufgebaut. Bei der Ausführungsform gemäß den Fig. 6 bis 8 weist die Aufnahmeeinheit ein dreiteiliges Steckaufnahmegehäuse 17 bis 19 auf, das aus einer Steckaufnahme 17, einem Führungsgehäuse 18 und einem Befestigungsteil 19 besteht. Bei der Ausführungsform gemäß Fig. 21 hingegen weist die Aufnahmeeinheit 8f ein einteiliges Steckaufnahmegehäuse 50 auf, in dem eine ebenfalls einteilig gestaltete Rastschieberanordnung 51 linearbeweglich verschiebbar gehalten ist. Die Rastschieberanordnung 51 ist als einteilig in einem Spritz- oder Druckgussverfahren hergestelltes Bauteil aus Kunststoff oder Metall ausgeführt. Auch das Steckaufnahmegehäuse 50 ist als in einem Spritz- oder Druckgussverfahren einteilig hergestelltes Bauteil aus Kunststoff oder Metall ausgeführt. Die Rastschieberanordnung 51 vereint die Funktionen des Steuerschiebers 20, des Verbindungsgliedes 21 und des Rastschiebers 22 aus der Ausführungsform gemäß Fig. 8 in sich. Eine Rückstellfeder 52 hat die gleiche Funktion wie die Rückstellfeder 53 gemäß Fig. 8.

Bei der Ausführungsform gemäß Fig. 21 ist eine mit dem Steckaufnahmegehäuse 50 oder der nicht dargestellten Tragstruktur verrastbare Rastblende 49 vorgesehen. Die Befestigungseinheit 7f weist analog zu den Ausführungsformen nach Fig. 8 einen Steckkeil auf, in dem das Betätigungsglied 6f linearbeweglich verschiebbar angeordnet ist. Das Betätigungsglied 6f weist einen Druckknopf auf, der mittels einer Rückstellfeder 48 in einer Ausgangslage gesichert ist, in der der Druckknopf über die Außenseite der Armlehnenanordnung 5f hinausragt. Der Steckkeil der Befestigungseinheit 7f weist einen einstückig angeformten Radialfortsatz 47 auf, der als Anschlag für die Armlehnenanordnung 5f dient.

## Patentansprüche

1. Fahrzeugsitz (1) mit einer Tragstruktur (4, 4a bis 4f), mit einer Sitzfläche (3), sowie mit einer Rückenlehne (2) und mit wenigstens einer Armlehnenanordnung (5, 5a bis 5e), die an der Tragstruktur (4, 4a bis 4f) gehalten ist, **dadurch gekennzeichnet, dass** die Armlehnenanordnung (5a bis 5f) eine Befestigungseinheit (7a bis 7f) aufweist, die werkzeuglos mit einer komplementären Aufnahmeeinheit (8a bis 8f) der Tragstruktur (4a bis 4f) verbindbar oder von der Aufnahmeeinheit (8a bis 8f) lösbar ist.

2. Fahrzeugsitz nach Anspruch 1, **dadurch gekennzeichnet, dass** die Befestigungseinheit (7a bis 7d, 7f) und/oder die Aufnahmeeinheit (8a bis 8d, 8f) einen beweglichen Rastmechanismus aufweisen, und dass ein mit dem Rastmechanismus gekoppeltes Betätigungsglied (6a bis 6c, 32, 6f) vorgesehen ist, das den Rastmechanismus zwischen einer Raststellung und einer Freigabestellung verlagert.

3. Fahrzeugsitz nach Anspruch 2, **dadurch gekennzeichnet, dass** das Betätigungsglied (6a bis 6c, 32, 6f) linearbeweglich oder drehbeweglich gelagert ist.

4. Fahrzeugsitz nach Anspruch 2, **dadurch gekennzeichnet, dass** der Rastmechanismus kraftbegrenzt formschlüssig wirksam ist, und dass eine Stelleinrichtung zur Einstellung einer Rückhaltekraft des Rastmechanismus vorgesehen ist.

5. Fahrzeugsitz nach einem der Ansprüche 2 bis 4, **dadurch gekennzeichnet, dass** der Rastmechanismus eine Bajonettverschlussfunktion aufweist.

6. Fahrzeugsitz nach einem der Ansprüche 2 bis 5, **dadurch gekennzeichnet, dass** der Rastmechanismus eine federkraftbeaufschlagte Sicherungseinrichtung aufweist, die den Rastmechanismus kraftbegrenzt in der Raststellung hält.

7. Fahrzeugsitz nach Anspruch 1, **dadurch gekennzeichnet, dass** die Befestigungseinheit (7e) und/oder die Aufnahmeeinheit (8e) eine Magnetsicherung (43) aufweisen, und dass ein Betätigungsglied (37) vorgesehen ist, das zwischen einer eine Magnetfunktion der Magnetsicherung (43) reduzierenden Lösestellung und einer die Magnetfunktion herstellenden Sicherungsstellung beweglich gelagert ist.

8. Fahrzeugsitz nach Anspruch 7, **dadurch gekennzeichnet, dass** die Magnetsicherung (43) wenigstens einen Permanentmagneten an der Befestigungseinheit (7e) oder der Aufnahmeeinheit (8e) aufweist, und dass der Aufnahmeeinheit (8e) oder der Befestigungseinheit (7e) wenigstens ein komplementäres, magnetisierbares Metallteil (40) zugeordnet ist.

9. Fahrzeugsitz nach Anspruch 7, **dadurch gekennzeichnet, dass** das Betätigungsglied (37) drehbar gelagert ist, und dass die Magnetsicherung (43) in Montage- oder Demontagerichtung der Befestigungseinheit (7e) wirksam ist.
